(19) Europäisches Patentamt
European Patent Office
Office européen des brevets

(11) EP 0 998 534 B1

(12) **FASCICULE DE BREVET EUROPEEN**

(45) Date de publication et mention de la délivrance du brevet:
**07.11.2001 Bulletin 2001/45**

(21) Numéro de dépôt: **98946503.4**

(22) Date de dépôt: **17.07.1998**

(51) Int Cl.[7]: **C09D 183/04**, C08K 3/22

(86) Numéro de dépôt international:
**PCT/FR98/01568**

(87) Numéro de publication internationale:
**WO 99/05231 (04.02.1999 Gazette 1999/05)**

(54) **DISPERSION DE PARTICULES DE TITANE COMPRENANT UN LIANT A BASE D'UN POLYORGANOSILOXANE**

POLYSILOXANBINDEMITTEL-ENTHALTENDE DISPERSION VON TEILCHENFÖRMIGEN TITANDIOXIDEN

DISPERSION OF TITANIUM PARTICLES COMPRISING A BINDER BASED ON POLYORGANOSILOXANE

(84) Etats contractants désignés:
**AT BE CH DE DK ES FI FR GB GR IT LI NL PT SE**
Etats d'extension désignés:
**LT SI**

(30) Priorité: **22.07.1997 FR 9709378**

(43) Date de publication de la demande:
**10.05.2000 Bulletin 2000/19**

(73) Titulaire: **RHODIA CHIMIE**
**92408 Courbevoie Cédex (FR)**

(72) Inventeurs:
- **LEHAUT, Corinne**
  **F-75011 Paris (FR)**
- **CARDINAUD, Denis**
  **F-69100 Villeurbanne (FR)**

(74) Mandataire: **Delenne, Marc et al**
**Rhodia Services,**
**Direction de la Propriété Industrielle,**
**40, rue de la Haie-Coq**
**93306 Aubervilliers Cedex (FR)**

(56) Documents cités:
**EP-A- 0 633 064**
**EP-A- 0 792 687**
**EP-A- 0 816 466**
**EP-A- 0 857 770**
**WO-A-95/11751**
**WO-A-97/10185**
**WO-A-98/03607**
**FR-A- 2 431 324**
**US-A- 5 775 867**

- **PATENT ABSTRACTS OF JAPAN vol. 097, no. 010, 31 octobre 1997 & JP 09 152230 A (SANYO ELECTRIC CO LTD), 10 juin 1997**
- **PATENT ABSTRACTS OF JAPAN vol. 097, no. 008, 29 août 1997 & JP 09 100437 A (YAMAGATA PREF GOV TECHNO PORISU ZAIDAN;NIPPON OIL & FATS CO LTD), 15 avril 1997**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 998 534 B1

Printed by Jouve, 75001 PARIS (FR)

## Description

La présente invention concerne des dispersions de particules de dioxyde de titane photocatalytique susceptibles d'être utilisées pour traiter des substrats.

Il est connu que le dioxyde de titane permet, de par son activité photocatalytique, la dégradation de molécules organiques ou bioorganiques.

Si ce dioxyde de titane photocatalytique est déposé sur un support, la surface de ce support devient oxydante et les salissures - notamment organiques - qui s'y déposent sont détruites par photooxydation. La surface est dite autonettoyante.

Le dépôt de dioxyde de titane à la surface du substrat peut être réalisé à partir de dispersions de particules de dioxyde de titane, De préférence, on utilise des dispersions de particules présentant une faible taille, notamment nanoparticulaire, de manière à obtenir des surfaces translucides, contrairement au dioxyde de titane micrométrique qui donne des surfaces blanches.

Les surfaces traitées peuvent être du verre, des plastiques, des matériaux de construction (mortiers, bétons, terres cuites), des céramiques, des pierres, du papier ou du bois.

Le dépôt de dioxyde de titane sur ces supports doit fortement adhéré au support pour que les surfaces traitées puissent être mises en place et afin qu'elles conservent dans le temps leurs propriétés autonettoyantes. Il faut également que le liant qui permet aux particules d'adhérer au support ne soit pas sensible à la photocatalyse des particules de dioxyde de titane.

Dans ce but, plusieurs procédés ont été mis en oeuvre proposant différents types de liants permettant de coller les particules au substrat.

Un premier procédé consiste à déposer sur le substrat à chaud des dispersions de particules de dioxyde de titane contenant le précurseur d'un liant. Par exemple, il a été proposé d'utiliser des dispersions de particules de dioxyde de titane et de liants organométalliques types titanates ou silicates. Les particules se trouvent alors prises dans un film de silice ou de dioxyde de titane (ce principe est décrit par exemple dans WO 97/10185). Ce liant minéral présente l'intérêt de ne pas être photodégradable.

Un deuxième procédé consiste à déposer sur le substrat à froid des dispersions de particules de dioxyde de titane contenant un liant organique. Un problème est que ce liant ne doit pas se dégrader sous l'effet des propriétés photocatalytiques des particules de dioxyde de titane. Pour cela, il a été proposé, par exemple, de choisir le liant parmi les silicones.

Cependant, bien que les liants silicones proposés ne se dégradent pas au contact des particules photocatalytiques, on observe qu'ils ne conduisent pas toujours à un revêtement homogène, dur et adhérent : bien souvent, les revêtements obtenus peuvent être éliminés par simple frottement avec le doigt.

Un but de la présente invention est donc de proposer des dispersions de particules de dioxyde de titane et d'un liant non photodégradable utilisables pour former à froid des revêtements photocatalytiques à la surface de substrat.

Un autre but de la présente invention est de proposer de telles dispersions dont l'utilisation conduit à des revêtements homogènes, durs et adhérents.

Dans ces buts, l'invention concerne une dispersion de particules de dioxyde de titane photocatalytique, dans laquelle la phase liquide comprend au moins un catalyseur de réticulation et au moins un poiyorganosiloxane soit de formule (I) : $M_\alpha D_\beta Q_\delta (O_{1/2}R^i)_\varepsilon$, soit de formule (II) : $M_\alpha D_\beta T_\gamma (O_{1/2}R^i)_\varepsilon$, telles que définies ci-dessous.

Dans ces buts, l'invention concerne également l'utilisation de cette dispersion pour traiter des substrats.

Les dispersions selon l'invention présentent l'avantage d'être chimiquement neutres et de ne pas interagir avec les substrats sur lesquels elles sont déposées.

Elles présentent également l'avantage de mettre en oeuvre des liants de faible coût.

Elles permettent en outre, dans certaines conditions d'utilisation, de conduire à des revêtements transparents ou translucides.

L'invention concerne tout d'abord une dispersion de particules de dioxyde de titane photocatalytique, dans laquelle la phase liquide comprend au moins un polyorganosiloxane :

- soit de formule moyenne (I) : $M_\alpha D_\beta Q_\delta (O_{1/2}R^i)_\varepsilon$, dans laquelle :

  - ♦ $M = R^{ii}_3SiO_{1/2}$
    $D = R^{ii}_2SiO_{2/2}$
    $Q = SiO_{4/2}$
    avec $R^{ii}$, identique ou différent, représentant soit un radical alkyle linéaire ou ramifié ayant de 1 à 8 atomes de carbone, soit un groupe aryle substitué ou non ayant de 6 à 12 atomes de carbone, soit un groupe aralkyle, alkaryle, aryloxyalkyle ou alcoxyaryle dans lequel le groupe aryle comprend de 6 à 12 atomes de carbone qui

peuvent éventuellement être substitués par au moins un groupe alkyle ou alkoxy, linéaire ou ramifié, ayant de 1 à 4 atomes de carbone, et dans lequel le groupe alkyle ou alkoxy a de 1 à 4 atome de carbone et est linéaire ou ramifié,

- ♦ $\alpha$, $\beta$ et $\delta$ représentent respectivement les fractions molaires des atomes de silicium des motifs M, D et Q, avec $\alpha + \beta + \delta = 1$, et :
  $\alpha \leq 0,10$, de préférence $\alpha \leq 0,010$,
  $\beta \leq 0,85$,
  $\delta \geq 0,10$,
- ♦ $R^i$, identiques ou différents, représentent un groupe alkyle ayant de 1 à 4 atomes de carbone,
- ♦ $\varepsilon$ représente le nombre moyen de motifs $O_{1/2}R^1$ par atome de silicium,

- soit de formule moyenne (II) : $M_\alpha D_\beta T_\gamma (O_{1/2}R^i)\varepsilon$, dans laquelle :

  - ♦ M, D, $R^i$ et $\varepsilon$ ont la signification ci-dessus, $T = R^{ii}SiO_{3/2}$, avec $R^{ii}$ de même signification que ci-dessus,
  - ♦ $\alpha$, $\beta$ et $\gamma$ représentent respectivement les fractions molaires des atomes de silicium des motifs M, D et T, avec $\alpha + \beta + y = 1$, et :
    $\alpha \leq 0,20$, de préférence $\alpha \leq 0,010$,
    $\beta \leq 0,60$,
    $\gamma \geq 0,30$.

De préférence, le polyorganosiloxane de la dispersion est de formule (I) ou (II) et $R^i$ est un groupement éthyl ou méthyl. En moyenne, le polyorganosiloxane peut également présenter des extrémités silanol ($R^i$ = H), lesdites extrémités ne représentant pas plus de 20 % de la totalité des extrémités.

Selon une première variante préférée, la dispersion selon l'invention comprend un polyorganosiloxane de formule (II) dans laquelle :

- pour chaque motif $T = R^{ii}SiO_{3/2}$, $R^{ii}$ est un méthyl,
- pour chaque motif $D = R^{ii}{}_2SiO_{2/2}$, un substituant $R^{ii}$ est un méthyl et l'autre substituant $R^{ii}$ est un octyl,
- $\beta$ vaut au plus 0,10,
- $\gamma$ vaut au moins 0,70.

Selon une deuxième variante préférée, la dispersion selon l'invention comprend un polyorganosiloxane de formule (II) dans laquelle :

- pour chaque motif $T = R^{ii}SiO_{3/2}$,$R^{ii}$ est un méthyl,
- pour chaque motif $D = R^{ii}{}_2SiO_{2/2}$ les deux substituants $R^{ii}$ sont des méthyl,
- $\beta$ vaut au plus 0,30,
- $\gamma$ vaut au moins 0,70.

Selon une troisième variante préférée, la dispersion selon l'invention comprend un polyorganosiloxane de formule (II) dans laquelle :

- pour chaque motif $T = R^{ii}SiO_{3/2}$, $R^{ii}$ est un propyl,
- pour chaque motif $D = R^{ii}{}_2SiO_{2/2}$, les deux substituants $R^{ii}$ sont des méthyl,
- $\beta$ vaut au plus 0,40,
- $\gamma$ vaut au moins 0,40.

Les dispersions selon l'invention peuvent également comprendre un catalyseur de réticulation. Celui-ci peut être choisi parmi les composés organiques du titane (par exemple les titanates d'alkyle) ou de l'étain (par exemple le dicarboxylate de dialkyl-étain).

Les titanates d'alkyle sont préférés.

L'utilisation de ce catalyseur est recommandée pour l'utilisation de la dispersion lors du traitement de substrats en verre.

La phase liquide de la dispersion selon l'invention peut ne comprendre qu'un polyorganosiloxane tel que défini précédemment ou bien contenir également un solvant.

Le solvant de la phase liquide de la dispersion selon l'invention peut être aqueux ou organique.

Il s'agit en général d'un solvant organique. Le solvant peut être choisi parmi les solvants des polymères silicones utilisés, comme par exemple le D4 (octaméthylcyclotétrasiloxane) ou d'autres siloxanes volatils, le white spirit,

les alcools en $C_1$-$C_8$, les hydrocarbures aliphatiques ou aromatiques tels que le cyclohexane ou les alcanes.

Le choix du solvant se fait en fonction de sa compatibilité avec le polyorganosiloxane. On peut ainsi jouer sur la transparence du revêtement final.

De préférence, la dispersion selon l'invention contient un solvant, notamment lorsque l'on souhaite diminuer la concentration en dioxyde de titane dans le revêtement pour obtenir des revêtements plus translucides ou plus transparents.

Les particules photocatalytiques de la dispersion selon l'invention sont de préférence des particules de dioxyde de titane présentant une taille d'au plus 100 nm, notamment comprise entre 10 et 50 nm. Les diamètres sont mesurés par microscopie électronique par transmission (MET).

La nature de la phase cristalline est, de préférence, majoritairement la forme cristalline anatase. "Majoritairement" signifie que le taux d'anatase des particules de dioxyde de titane est supérieur à 50 % en masse. De préférence, les particules présentent un taux d'anatase supérieur à 80 %.

Le taux de cristallisation et la nature de la phase cristalline sont mesurés par diffraction RX.

Il est préférable d'utiliser des particules de dioxyde de titane monodisperses afin d'obtenir des revêtements plus transparents. On entend par monodisperses des particules présentant un indice de dispersion d'au plus 0,5, de préférence d'au plus 0,3, l'indice de dispersion étant donné par la formule suivante :

$$I = \frac{\varnothing_{84} - \varnothing_{16}}{2\varnothing_{50}}$$

dans laquelle :

- $\varnothing_{84}$ est le diamètre des particules pour lequel 84 % en poids des particules ont un diamètre inférieur à $\varnothing_{84}$,
- $\varnothing_{16}$ est le diamètre des particules pour lequel 16 % en poids des particules ont un diamètre inférieur à $\varnothing_{16}$,
- $\varnothing_{50}$ est le diamètre moyen des particules.

Les diamètres utiles à la détermination de l'indice de dispersion sont mesurés par sédimentation centrifuge des particules de la dispersion, suivie par rayons X, à l'aide d'un appareil Brookhaven type XDC.

Les particules monodisperses de la dispersion sont, de préférence, issues d'un procédé de préparation dit en solution ou par voie humide (thermolyse, thermohydrolyse ou précipitation d'un sel de titane) par opposition aux procédés d'oxydation ou de pyrolyse haute température d'un sel de titane. Il peut s'agir par exemple de particules de dioxyde de titane obtenues par le procédé décrit dans la demande EP-A-0 335 773.

Il peut notamment s'agir du procédé de préparation qui consiste à hydrolyser au moins un composé du titane A en présence d'au moins un composé B choisi parmi :

(i) les acides qui présentent :

- soit un groupement carboxyle et au moins deux groupements hydroxyles et/ou amines,
- soit au moins deux groupements carboxyles et au moins un groupement hydroxyle et/ou amine,

(ii) les acides phosphoriques organiques de formules suivantes :

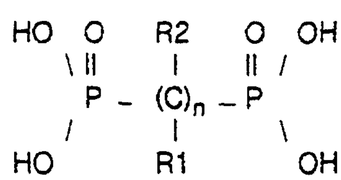

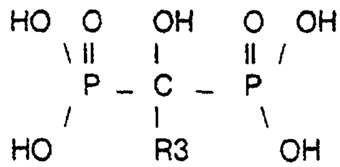

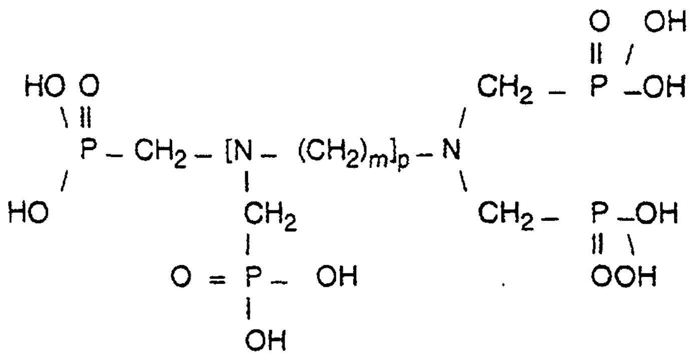

dans lesquelles, n et m sont des nombres entiers compris entre 1 et 6, p est un nombre entier compris entre 0 et 5, R1, R2, R3 identiques ou différents représentant un groupement hydroxyle, amino, aralkyl, aryl, alkyl ou l'hydrogène,

(iii) les composés capables de libérer des ions sulfates en milieu acide,

(iv) les sels des acides décrits ci-dessus,

et en présence de germes de dioxyde de titane anatase présentant une taille d'au plus 5 nm et dans un rapport pondéral exprimé en $TiO_2$ présent dans les germes/titane présent avant introduction des germes dans le milieu d'hydrolyse, exprimé en $TiO_2$, compris entre 0,01 % et 3 %.

Ce procédé de préparation des particules comprend donc plusieurs étapes et, en premier lieu, une étape de préparation de la solution de départ comprenant un composé du titane A, un composé B tel que défini précédemment et des germes de dioxyde de titane.

Cette solution de départ, destinée à être hydrolysée, est de préférence totalement aqueuse ; éventuellement on peut ajouter un autre solvant, un alcool par exemple, à condition que le composé du titane A et le composé B utilisés soient alors substantiellement solubles dans ce mélange.

En ce qui concerne le composé du titane A, on utilise en général un composé choisi parmi les halogénures, les oxyhalogénures, les alcoxydes de titane, les sulfates et plus particulièrement les sulfates synthétiques.

On entend par sulfates synthétiques des solutions de sulfates de titanyle réalisées par échange d'ions à partir de solutions de chlorure de titane très pures ou par réaction d'acide sulfurique sur un alcoxyde de titane.

De préférence, on opère avec des composés du titane du type halogénure ou oxyhalogénure de titane. Les halogénures ou les oxyhalogénures de titane plus particulièrement utilisés dans la présente invention sont les fluorures, les chlorures, les bromures et les iodures (respectivement les oxyfluorures, les oxychlorures, les oxybromures et les oxyiodures) de titane.

Selon un mode particulièrement préféré, le composé du titane est l'oxychlorure de titane $TiOCl_2$.

La quantité de composé de titane A présente dans la solution à hydrolyser n'est pas critique.

La solution initiale contient en outre au moins un composé B tel que défini précédemment. A titre d'exemples non limitatifs de composés B entrant dans le cadre de la présente invention, on peut citer notamment :

- les acides hydroxypolycarboxyliques, et plus particulièrement les acides hydroxydi- ou hydroxytricarboxyliques tels que l'acide citrique, l'acide maléique et l'acide tartrique.
- les acides (polyhydroxy)monocarboxyliques, comme par exemple l'acide glucoheptonique et l'acide gluconique,
- les acides poly(hydroxycarboxyliques), comme par exemple l'acide tartrique,
- les monoacides dicarboxyliques et leurs amides correspondantes, comme par exemple l'acide aspartique, l'asparagine et l'acide glutamique,
- les aminoacides monocarboxyliques, hydroxylés ou non, comme par exemple la lysine, la sérine et la thréonine,

- l'aminotriphosphonate de méthylène, l'éthylènediaminotétraphosphonate de méthylène, le triéthylènetétraaminohexaphosphonate de méthylène, le tétraéthylènepentaaminoheptaphosphonate de méthylène, le pentaéthylènehexaaminooctaphosphonate de méthylène,
- le diphosphonate de méthylène; de 1,1' éthylène; de 1,2 éthylène; de 1,1' propylène; de 1,3 propylène; de 1,6 hexaméthylène; le 2,4 dihydroxypentaméthylène - 2,4 diphosphonate; le 2,5 dihydroxyhexaméthylène - 2,5 disphosphonate ; le 2,3 dihydroxybutylène - 2,3 diphosphonate ; le 1 hydroxybenzyle -1,1' diphosphonate ; le 1 aminoéthylène 1-1' diphosphonate ; l'hydroxyméthylène diphosphonate ; le 1 hydroxyéthylène 1,1' diphosphonate ; le 1 hydroxypropylène 1-1' diphosphonate ; le 1 hydroxybutylène 1-1' diphosphonate ; le 1 hydroxyhexaméthylène - 1,1' diphosphonate.

Comme déjà indiqué, il est également possible d'utiliser à titre de composé B tous les sels des acides précités. En particulier, ces sels sont soit des sels alcalins, et plus particulièrement des sels de sodium, soit des sels d'ammonium.

Ces composés peuvent être choisis aussi parmi l'acide sulfurique et les sulfates d'ammonium, de potassium.

De préférence, les composés B tels que définis ci-dessus sont des composés hydrocarbonés de type aliphatique. Dans ce cas, la longueur de la chaîne principale hydrocarbonée n'excède pas, de préférence, 15 atomes de carbone, et plus préférentiellement 10 atomes de carbone.

La quantité de composé B n'est pas critique. D'une manière générale, la concentration molaire du composé B par rapport à celle du composé du titane A est comprise entre 0,2 et 10 % et de préférence entre 1 et 5 %.

Enfin la solution de départ comprend des germes de dioxyde de titane utilisés d'une manière spécifique.

Tout d'abord, les germes de dioxyde de titane utilisés dans la présente invention doivent présenter une taille d'au plus 5 nm, mesurée par diffraction X. De préférence, on utilise des germes de dioxyde de titane présentant une taille comprise entre 3 et 5 nm.

Ensuite, le rapport pondéral du dioxyde de titane présent dans les germes sur le titane présent dans le milieu d'hydrolyse avant introduction des germes (c'est-à-dire apporté par le composé du titane A), et exprimé en $TiO_2$, est compris entre 0,01 et 3 %. Ce rapport peut être préférentiellement compris entre 0,05 et 1,5 %. La réunion de ces deux conditions sur les germes (taille et rapport pondéral) associée au procédé tel que décrit précédemment permet de contrôler précisément la taille finale des particules de dioxyde de titane en associant à un taux de germes une taille de particule. On peut ainsi obtenir des particules dont la taille varie entre 5 et 100 nm.

On utilise des germes de dioxyde de titane sous forme anatase de manière à induire la précipitation du dioxyde de titane sous forme anatase. Généralement, du fait de leur petite taille, ces germes se présentent plutôt sous la forme d'anatase mal cristallisé. Les germes se présentent habituellement sous la forme d'une suspension aqueuse constituée de dioxyde de titane. Ils peuvent être obtenus de manière connue par un procédé de neutralisation d'un sel de titane par une base.

L'étape suivante consiste à réaliser l'hydrolyse de cette solution de départ par tout moyen connu de l'homme du métier et en général par chauffage. Dans ce dernier cas, l'hydrolyse peut de préférence être effectuée à une température supérieure ou égale à 70°C. On peut aussi travailler dans un premier temps à une température inférieure à la température d'ébullition du milieu puis maintenir le milieu d'hydrolyse en palier à la température d'ébullition.

Une fois l'hydrolyse réalisée, les particules de dioxyde de titane obtenues sont récupérées par séparation du solide précipité des eaux mères. Puis, elles sont redispersées dans un milieu liquide aqueux de manière à obtenir une dispersion de dioxyde de titane. Ce milieu liquide peut être acide ou basique.

Il a été observé que les particules de dioxyde de titane issues d'un procédé de préparation dit en solution ou par voie humide, et notamment issues du procédé décrit ci-dessus avec hydrolyse à température d'environ 100 °C, présentent, de par leur porosité, un indice de réfraction plus faible que les particules de dioxyde de titane issues d'autres procédés. Cette propriété présente un grand intérêt lorsque les particules sont utilisées pour préparer un revêtement sur un substrat en verre, car le revêtement obtenu présente également un faible indice de réfraction. Cet avantage optique est important car une couche de fort indice de dioxyde de titane conduit à augmenter la réflexion lumineuse du verre porteur, donc à diminuer sa transmission lumineuse. Or, pour certaines applications, notamment dans le domaine des vitrages équipant des véhicules, il est indispensable d'avoir des niveaux de transmission lumineuse élevés (pour un pare-brise, une transmission lumineuse minimale de 75 % est nécessaire).

De préférence, les particules de la dispersion présentent une surface spécifique BET d'au moins 70 $m^2$/g.

On entend par surface spécifique BET, la surface spécifique déterminée par adsorption d'azote conformément à la norme ASTMD 3663-78 établie à partir de la méthode BRUNAUER - EMMETT - TELLER décrite dans le périodique "The Journal of the American Society", 60, 309 (1938). Pour mesurer la surface spécifique des particules selon l'invention, lorsqu'elles se présentent sous forme de dispersion, il est essentiel de suivre le protocole de mesure qui consiste à éliminer la phase liquide de la dispersion puis à sécher les particules sous vide à une température de 150°C pendant au moins 4 heures.

De préférence, les particules de la dispersion présentent également une densité de l'ordre de 2,4. Par "de

l'ordre", on entend que la densité est de 2,4 ± 0,2. Une telle valeur de densité est faible par rapport à la densité classique du dioxyde de titane anatase qui est de 3,8. Cette densité est évaluée par mesure des volumes poreux.

Ces caractéristiques de surface spécifique et de densité peuvent être obtenues pour les particules de dioxyde de titane issues d'un procédé de préparation dit en solution ou par voie humide, et notamment issues du procédé décrit ci-dessus avec hydrolyse à température d'environ 100 °C.

Les proportions entre les particules et le polyorganosiloxane de la dispersion selon l'invention varient avec l'utilisation qui en est faite. Ainsi pour l'application de la dispersion en tant que revêtement sur du béton, la proportion des particules représente en général au moins 5 % en poids du mélange particules + polyorganosiloxane ; par contre pour l'application de la dispersion en tant que revêtement sur du verre, la proportion des particules représente en général au moins 10 % en poids du mélange particules + polyorganosiloxane + catalyseur de réticulation optionnel, de préférence au moins 50 %, et en général au plus 90 %.

Le solvant de la dispersion selon l'invention est présent en général en quantité telle que l'extrait sec en particules de dioxyde de titane est d'au moins 0,5 % en poids.

Si un catalyseur de réticulation est présent dans la dispersion, il représente en général au moins 5 % en poids du mélange polyorganosiloxane + catalyseur et, de préférence, au plus 50 % en poids.

L'invention concerne également le procédé de préparation des dispersions ci-dessus qui consiste à simplement mélanger les particules de dioxyde de titane et le polyorganosiloxane.

Les polyorganosiloxanes pouvant être mis en oeuvre dans la dispersion sont connus et accessibles commercialement.

Les particules de dioxyde de titane peuvent également être obtenues commercialement. Elles peuvent se présenter sous diverses formes.

Il peut tout d'abord s'agir de dispersions aqueuses de particules de dioxyde de titane, comme celles commercialisées par Rhône-Poulenc sous la dénomination S5-300 ou de dispersions obtenues selon le procédé décrit dans le brevet EP-A-0 335 773 tel que décrit précédemment.

De préférence, on utilise des dispersions aqueuses basiques, car il a été observé que ces dernières conduisaient à des dispersions donnant des revêtements plus transparents que les dispersions aqueuses acides. Dans le cas de dépôt sur verre, cette différence peut être atténuée si on active le verre par NaOH avant le dépôt.

Il peut également s'agir de dispersions organiques de particules de dioxyde de titane. Celles-ci peuvent être préparées à partir de dispersions aqueuses de particules de dioxyde de titane, le transfert de phase étant, par exemple, réalisé selon l'une des méthodes suivantes :

- lavage à l'acétone ou au solvant désiré par centrifugation et redispersion dans le solvant organique,
- distillation azéotropique du mélange eau/solvant si l'eau et le solvant sont non miscibles et forment un azéotrope,
- évaporation de l'eau à l'évaporateur rotatif si le solvant est miscible à l'eau et bout à une température supérieure à celle de l'eau
- mélange d'une dispersion aqueuse avec un milieu organique comprenant un agent de transfert cationique, si les particules sont chargées négativement, ce dernier pouvant être choisi notamment parmi les amines quaternaires ou les sels d'ammonium quaternaire, ou un milieu comprenant un agent de transfert anionique, si les particules sont chargées positivement (ce procédé est plus particulièrement décrit dans le brevet GB-A-988.330).

On peut également utiliser des poudres de dioxyde de titane. De telles poudres sont disponibles commercialement, on peut citer les poudres G5 ou DT51D commercialisées par Rhodia Chimie. Des poudres peuvent également être obtenues par atomisation d'une dispersion aqueuse telle que décrite ci-dessus.

De préférence, on prépare les dispersions selon l'invention à partir de particules sous forme de dispersions, notamment lorsque l'on souhaite obtenir un traitement de surface transparent, les poudres conduisant généralement à des revêtements moins transparents.

L'invention concerne également l'utilisation des dispersions précédentes pour traiter la surface d'un substrat.

Le polyorganosiloxane joue le rôle de liant pour fixer les particules sur le substrat.

Le substrat peut être de nature variée : il peut s'agir, par exemple, de verre, de polymères (plastiques), de matériaux de construction tels que mortiers, bétons, terres cuites, de céramiques, de pierres, de bois, de métaux, de papier.

Dans le cas du traitement de substrats alcalins et notamment du béton, on utilise, de préférence, la dispersion définie dans la troisième variante ci-dessus, à savoir celle contenant au moins un polyorganosiloxane de formule (II) dans laquelle :

- pour chaque motif T = $R^{ii}SiO_{3/2}$, $R^{ii}$ est un propyl,
- pour chaque motif D = $R^{ii}_2SiO_{2/2}$, les deux substituants $R^{ii}$ sont des méthyl,
- $\beta$ vaut au plus 0,40,

- $\gamma$ vaut au moins 0,40.

Si les polyorganosiloxanes présentent des propriétés intrinsèques, telles que par exemple protection des substrats (hydrofugation, ...), il a été observé que le fait de les mélanger avec les particules de dioxyde de titane ne modifiait pas leurs propriétés. C'est le cas, par exemple, du revêtement mettant en oeuvre le polyorganosiloxane de la troisième variante préférée qui permet d'obtenir un revêtement qui adhère fermement au substrat alcalin et procure de plus une propriété d'hydrofugation propre à ce type de liant polyorganosiloxane.
Le dépôt peut être réalisé par toute méthode classique : rouleau, pinceau, pistolet, spray.
Les exemples suivants illustrent l'invention sans toutefois en limiter la portée.

**EXEMPLES**

**Exemple 1 : préparation d'un polyorganosiloxane de formule (I)**

Dans un réacteur cylindrique en verre de capacité 2 litres, à double enveloppe, muni d'un agitateur à ancre, on place 4 moles (609 g) d'orthosilicate de méthyle, 3 moles (890 g) d'octaméthylcyclotétrasiloxane, 1,6 g de solution aqueuse d'hydroxyde de potassium à 39 % de potasse et 72 g d'eau. On chauffe la masse à 70°C, et on maintient un palier de température de 6 h à 70 ± 3°C. On refroidit ensuite le milieu réactionnel, puis on ajoute 0,41 g d'acide chlorhydrique en solution aqueuse à 30 % en poids. La masse réactionnelle est enfin en présence d'un adjuvant de filtration (Clarcel).
On obtient 1247 g d'huile silicone de viscosité cinématique 1,32 $mm^2/s$, de formule moyenne (déterminée par $RMN^{29}Si$) ;

$$(Me_2SiO_{2/2})_{0,80}\ (SiO_{4/2})_{0,20}\ (O_{1/2}Me)_{0,74}$$

**Exemple 2 : préparation d'un polyorganosiloxane de formule (II)**

Dans un réacteur de 2 litres, on charge 3,5 moles de diméthyldichlorosilane et 3,5 moles de propyltrichlorosilane. On amène la température à 60°C, puis on coule un mélange éthanol/eau (6,12 moles d'éthanol/6,6 moles d'eau) en 2 heures, sous agitation et chauffage à 80°C. On élimine ensuite l'éthanol acide par distillation 1 h 50 à 120°C.
Ensuite, on élimine les chlores résiduels par lavage avec 166 g d'éthanol et 5,7 g d'eau (pour ajuster à la viscosité voulue), puis on distille 1 h 05 à 120°C. On refroidit à 100°C et on neutralise au bicarbonate de sodium (11,1 g) à 100°C pendant 1h. On obtient 515 g de résine après filtration.
Cette résine a une viscosité cinématique de 87,7 $mm^2/s$ à 25°C.
Par $RMN^{29}Si$, la formule moyenne de ce polyorganosiloxane est la suivante (déterminée par $RMN^{29}Si$) :

$$(Me_2SiO_{2/2})_{0,40}(nPrSiO_{3/2})_{0,60}(O_{1/2}Et)_{0,38}$$

**Exemple 3 : préparation d'un polyorganosiloxane de formule (II)**

Dans un ballon de verre, agité par un agitateur à pales, muni d'un réfrigérant et inerte sous azote, on charge 282 g d'éthanol absolu et 0,30 g silanolate de potassium obtenu par réaction de potasse aqueuse, d'octaméthylcyclotétrasiloxane et d'hexaméthyldisiloxane, connu sous le nom Rhodorsil Cata 104. Ce catalyseur contient autant de moles de silanolates qu'une solution de potasse à 12 %. La masse est chauffée à 65°C, puis on commence à couler un polyméthylhydrogénosiloxane à terminaisons triméthylsilyle, de degré moyen de polymérisation 50. On coule 200 g de ce polymère en 4 h 30. La température s'élève à 75°C, température que l'on maintient pendant 3 h après la fin de la coulée. Après refroidissement de la masse, on neutralise par 0,59 g de solution 110, ester silylé de l'acide phosphorique, préparé par Rhône-Poulenc Silicones. On procède alors à une dévolatilisation à l'aide d'un évaporateur rotatif, sous 5 mm Hg et à 70°C.
On récupère 294 g d'un polymère de viscosité 30 $mm^2/s$ à 25°C.
Par $RMN^{29}Si$, la formule moyenne de ce polyorganosiloxane est la suivante :

$$(Me_3SiO_{1/2})_{0,04}(MeSiO_{3/2})_{0,96}(O_{1/2}Et)_{0,96}$$

**Exemple 4 : préparation d'un polyorganosiloxane comparatif**

Dans un ballon tricol de 500 ml équipé d'une agitation mécanique, d'un thermomètre, et d'une ampoule de coulée, on charge sous atmosphère d'azote 300 ml d'éthanol préalablement séché sur tamis moléculaire 3 Angstrôm, et 10 microlitres de catalyseur de KARSTEDT (10 % dans l'hexane). Le mélange est agité à 65°C et on commence à ajouter goutte à goutte le polyméthylhydrosiloxane (40 g, degré de polymérisation moyen $DP_n$ = 50). On observe un dégagement d'hydrogène important. La vitesse de coulée du fluide Si-H est réglée pour contrôler le débit d'hydrogène et l'exothermie de la réaction. En fin de coulée, le mélange est laissé pendant une heure sous agitation.

Puis, on coule goutte à goutte 36 g d'octène-1. Après addition, on chauffe le mélange réactionnel à 60°C jusqu'à ce que toutes les fonctions Si-H soient consommées. On évapore ensuite l'excès d'alcool et d'octène. On récupère 80 g d'huile limpide et légèrement colorée. A partir de l'analyse RMN$^{29}$Si révèle la structure suivante

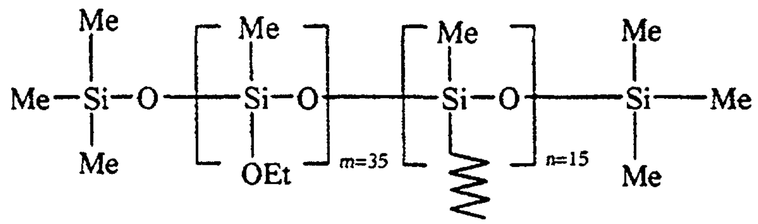

**Exemple 5 : préparation d'une dispersion aqueuse basique de particules de dioxyde de titane**

On prépare une dispersion aqueuse de nanoparticules de dioxyde de titane selon l'enseignement de la demande de brevet EP-A-0 335 773, en présence de germes.

On ajoute successivement à 394,7 g d'une solution d'oxychlorure de titane A à 1,9 mol/kg:

- 42,02 g d'HCl à 36 %
- 4,73 g d'acide citrique
- 547,1 g d'eau épurée
- 11,36 g (0,2 % en poids par rapport au titane de la solution A exprimé en $TiO_2$) de germes anatase en dispersion, de titre en $TiO_2$ 10 g/kg, et présentant une taille comprise entre 5 et 6 nm, ajoutés quand la température atteint 75°C. On maintient cette température pendant 2 h.

Le mélange est porté à ébullition (0,8°C/min) et y est maintenu pendant 3 h.

La solution est ensuite décantée, repulpée et neutralisée à pH = 6 et lavée jusqu'à élimination des chlorures et des ions $Na^+$.

Les particules sont alors redispersées avec NaOH à pH = 9 et à un extrait sec d'environ 12 %.

La taille, mesurée par MET, est de 45 nm. L'analyse par XDC indique une monopopulation sans agglomérats, l'indice de dispersion est de 0,2.

L'analyse par RX indique que les particules sont sous forme de $TiO_2$ anatase à 80 % en poids. Elles sont poreuses avec une densité de 2,54 g/cc.

**Exemple 6 : préparation d'une dispersion aqueuse basique de particules de dioxyde de titane**

On prépare une dispersion aqueuse de nanoparticules de dioxyde de titane selon l'enseignement de la demande de brevet EP-A-0 335 773, en présence de germes.

On ajoute successivement à 394,7 g d'une solution d'oxychlorure de titane à 1,9 mol/kg:

- 42,02 g d'HCl à 36 %
- 4,73 g d'acide citrique
- 501,7 9 d'eau épurée
- 56,8 g (1 % en poids par rapport au titane de la solution A exprimé en $TiO_2$) de germes anatase en dispersion, de titre en $TiO_2$ 10 g/kg, présentant une taille comprise entre 5 et 6 nm, ajoutés quand la température atteint 75°C. On maintient cette température pendant 2 h.

Le mélange est porté à ébullition (0,8°C/min) et y est maintenu pendant 3 h.

La solution est ensuite décantée, repulpée et neutralisée à pH = 6 et lavée jusqu'à élimination des chlorures et des ions $Na^+$.
Les particules sont alors redispersées avec NaOH à pH = 9 et à un extrait sec d'environ 12 %.
La taille, mesurée par MET, est de 25 nm.
L'analyse par RX indique que les particules sont sous forme de $TiO_2$ anatase à 80 % en poids.

**Exemple 7 : préparation d'une dispersion organique de particules de dioxyde de titane**

On introduit dans un ballon 200 g de la dispersion de l'exemple 5 dont on a ramené l'extrait sec à 10 %. On ajoute 180 g d'octaméthylecyclotétrasiloxane (D4) dans lequel a été, au préalable, ajouté 15 g d'acide isostéarique. On chauffe ensuite pour faire une distillation sur une colonne Vigreux. A 97°C, un azéotrope est distillé de composition eau/D4 d'environ 40/60. Le D4 est recyclé dans le ballon. Après 3 heures, on obtient une suspension de $TiO_2$ dans le D4, d'extrait sec 10 %.

**Exemple 8 : synthèse de dispersions de particules de dioxyde de titane et de liants polyorganosiloxanes**

On prépare des dispersions à partir des polyorganosiloxanes des exemples 1 à 4 et des dispersions de dioxyde de titane des exemples 5 à 7, ou d'une dispersion de dioxyde de titane commerciale S5-300.

8.1. Dispersion 1 (comparative)

On utilise une dispersion S5-300 acide ($HNO_3$, pH = 1). L'analyse par XDC indique que les particules sont monopopulées sans agglomérats, leur indice de dispersion est de 0,41. La mesure de la taille des particules en MET donne 45 nm. Leur surface spécifique BET (mesurée selon le protocole défini précédemment) est supérieure à 250 $m^2/g$. La structure cristalline, mesurée par RX, est anatase.
On mélange cette dispersion ramenée à un extrait sec de 10 % avec le polyorganosiloxane de l'exemple 4 dans les proportions massiques 82,4 % de dioxyde de titane et 17,6 % de polyorganosiloxane.
On réalise ensuite le dépôt de ce mélange sur un substrat en verre.
Le dépôt est effectué au pinceau sur des plaques de verre ayant au préalable été lavées à l'acétone puis séchées à l'air. On laisse ensuite le revêtement sécher librement à l'air.
Le film obtenu est non homogène, blanc et non adhérent : il est éliminé par simple passage du doigt sur la plaque de verre.

8.2. Dispersion 2 (selon l'invention)

On mélange de la dispersion S5-300 décrit ci-dessus et ramené à un extrait sec de 10 % avec un mélange M1 à base de polyorganosiloxane de l'exemple 1, ledit mélange comprenant:

- 5 % en poids du polyorganosiloxane de l'exemple 1,
- 5 % en poids de polysilicate de propyle,
- 1 % en poids de titanate de butyle,
- 89 % en poids d'essence E.

Par polysilicate de propyle, on entend le polysilicate de propyle de formule moyenne $(SiO_2)(O_{1/2}nPr)_{2,04}$, préparé par le procédé d'hydrolyse acide, à l'aide d'HCl, d'orthosilicate de propyle, suivie d'une neutralisation par le bicarbonate de sodium et d'une filtration. Il s'agit d'un liant.
L'essence E est une coupe d'hydrocarbures aliphatiques de points d'ébullition compris entre 96 et 113°C sous pression normale.
La dispersion S5-300 et le mélange M1 sont mélangés dans les proportions massiques de 20,1 % de dioxyde de titane et 79,9 % de polyorganosiloxane de l'exemple 1 + titanate de butyle.
Ce mélange obtenu est ensuite dilué avec de l'isopropanol de manière à obtenir une dispersion présentant un extrait sec de 1,3 % en poids de dioxyde de titane.
Le dépôt est effectué sur une plaque de verre comme pour la dispersion 1.
Le film obtenu est homogène, translucide mais légèrement blanchâtre, et dur (la dureté crayon à 1 semaine est de 5H).

8.3. Dispersion 3 (selon l'invention)

On utilise la dispersion de dioxyde de titane basique de l'exemple 6.
On mélange cette dispersion avec le mélange M1 précédent.
La dispersion et le mélange M1 sont mélangés dans les proportions massiques de 20,1 % de dioxyde de titane et 79,9 % de polyorganosiloxane de l'exemple 1 + titanate de butyle.
Le mélange obtenu est ensuite dilué avec de l'isopropanol de manière à obtenir une dispersion présentant un extrait sec de 0,75 % en poids de dioxyde de titane.
Le dépôt est effectué sur une plaque de verre comme précédemment.
Le film obtenu est homogène, translucide (on peut lire au travers). La dureté crayon à 1 semaine est de 7H.
L'activité photocatalytique de ce film a été mesurée. Le test de photooxydation consiste à contrôler la dégradation du gaz isobutane mis au contact du verre traité selon l'invention.
Pour cela, on introduit dans un réacteur le verre à tester et une quantité d'isobutane égale à 20 % du volume total du réacteur. L'appareil de test est constitué d'un carrousel tournant autour de 1 à 6 lampes U.V.A. basse pression présentant un maximum d'émission entre 300 et 400 nm. Les réacteurs contenant les verres à évaluer sont placés dans le carrousel, la face du verre à évaluer du côté du rayonnement U.V.A. Selon leur position et le nombre de lampes allumées, chaque verre reçoit une irradiation U.V.A. allant jusqu'à 30 $W/m^2$. L'irradiation dure 8 à 22 heures. On dose ensuite à l'aide d'un chromatographe en phase gazeuse l'avancement de la photodécomposition de l'isobutane par suivi de la quantité d'$O_2$. On traduit cet avancement à l'aide la constante de vitesse de disparition de l'$O_2$ en $mole/h/cm^2$.
Ce test, effectué sur le polyorganosiloxane seul en présence d'air, ne montre aucune consommation d'$O_2$: la résine ne se dégrade pas aux UVA.
Effectué sur la résine en présence $TiO_2$ et d'air, le test ne montre toujours pas de consommation d'$O_2$: la résine ne se photodégrade pas aux UVA.
En présence d'isobutane et d'air, la plaque contenant de la résine et du $TiO_2$ montre une consommation de 1 à 1,5 % d'$O_2$ en 17 h ce qui traduit une activité photocatalytique de la plaque.

8.4. Dispersion 4 (selon l'invention)

On mélange la dispersion de particules de l'exemple 6 avec un mélange M2 à base du polyorganosiloxane de l'exemple 3, ledit mélange comprenant :

- 7 % en poids du polyorganosiloxane de l'exemple 3,
- 5 % en poids de titanate de butyle,
- 88 % en poids d'hexaméthyldisiloxane.

La dispersion de l'exemple 6 et le mélange M2 sont mélangés dans les proportions massiques de 15 % de dioxyde de titane et 85 % de polyorganosiloxane de l'exemple 3 + titanate de butyle.
Le dépôt est effectué sur une plaque de verre comme précédemment.
Le film obtenu est homogène, translucide (on peut lire au travers) et dur.

8.5. Dispersion 5 (selon l'invention)

On utilise la dispersion de dioxyde de titane de l'exemple 7.
On prépare une dispersion selon l'invention comprenant le polyorganosiloxane de l'exemple 2 dilué à 8 % en poids dans le white spirit et 1 % en poids de $TiO_2$ par rapport au total.
On pulvérise cette dispersion à raison de 200 $g/m^2$ sur une plaque de béton sur laquelle a été préalablement pulvérisée la dispersion de dioxyde de titane de l'exemple 7 d'extrait sec 1 % en poids à 200 $g/m^2$ également.
Le film obtenu est homogène et adhérent. La teinte du béton n'est pas altérée par le film.
On observe que le revêtement présente des propriétés d'hydrofugation équivalentes à celles du polyorganosiloxane seul : la reprise en eau du béton est aussi faible par traitement du béton par le polyorganosiloxane seul que par traitement par la dispersion selon l'invention.

## Revendications

1. Dispersion de particules de dioxyde de titane photocatalytique, **caractérisée en ce que** la phase liquide comprend au moins un polyorganosiloxane:

- soit de formule moyenne (I) : $M_\alpha D_\beta Q_\delta (O_{1/2}R^i)_\varepsilon$, dans laquelle :

    - ♦ $M = R^{ii}_3SiO_{1/2}$
      $D = R^{ii}_2SiO_{2/2}$
      $Q = SiO_{4/2}$
      avec $R^{ii}$, identique ou différent, représentant soit un radical alkyle linéaire ou ramifié ayant de 1 à 8 atomes de carbone, soit un groupe aryle substitué ou non ayant de 6 à 12 atomes de carbone, soit un groupe aralkyle, alkaryle, aryloxyalkyle ou alcoxyaryle dans lequel le groupe aryle comprend de 6 à 12 atomes de carbone qui peuvent éventuellement être substitués par au moins un groupe alkyle ou alkoxy, linéaire ou ramifié, ayant de 1 à 4 atomes de carbone, et dans lequel le groupe alkyle ou alkoxy a de 1 à 4 atome de carbone et est linéaire ou ramifié,
    - ♦ $\alpha$, $\beta$ et $\delta$ représentent respectivement les fractions molaires des atomes de silicium des motifs M, D et Q, avec $\alpha + \beta + \delta = 1$, et :
      $\alpha \leq 0,10$, de préférence $\alpha \leq 0,010$,
      $\beta \leq 0,85$,
      $\delta \geq 0,10$,
    - ♦ $R^i$, identiques ou différents, représentent un groupe alkyle ayant de 1 à 4 atomes de carbone,
    - ♦ $\varepsilon$ représente le nombre moyen de motifs $O_{1/2}R^i$ par atome de silicium,

- soit de formule moyenne (II) : $M_\alpha D_\beta T_\gamma (O_{1/2}R^i)\varepsilon$, dans laquelle :

    - ♦ M, D, $R^i$ et $\varepsilon$ ont la signification ci-dessus, $T = R^{ii}SiO_{3/2}$, avec $R^{ii}$ de même signification que ci-dessus,
    - ♦ $\alpha$, $\beta$ et $\gamma$ représentent respectivement les fractions molaires des atomes de silicium des motifs M, D et T, avec $\alpha + \beta + \gamma = 1$, et :
      $\alpha \leq 0,20$, de préférence $\alpha \leq 0,010$,
      $\beta \leq 0,60$,
      $\gamma \geq 0,30$.

2. Dispersion selon la revendication 1, **caractérisée en ce que** le polyorganosiloxane est de formule (I) ou (II) et $R^i$ est un groupement éthyl ou méthyl

3. Dispersion selon la revendication 1 ou 2, **caractérisée en ce que** le polyorganosiloxane est de formule (II) et :

    - pour chaque motif $T = R^{ii}SiO_{3/2}$, $R^{ii}$ est un méthyl,
    - pour chaque motif $D = R^{ii}_2SiO_{2/2}$, un substituant $R^{ii}$ est un méthyl et l'autre substituant $R^{ii}$ est un octyl,
    - $\beta$ vaut au plus 0,10,
    - $\gamma$ vaut au moins 0,70.

4. Dispersion selon la revendication 1 ou 2, **caractérisée en ce que** le polyorganosiloxane est de formule (II) et :

    - pour chaque motif $T = R^{ii}SiO_{3/2}$, $R^{ii}$ est un méthyl,
    - pour chaque motif $D = R^{ii}_2SiO_{2/2}$, les deux substituants $R^{ii}$ sont des méthyl,
    - (3 vaut au plus 0,30,
    - $\gamma$ vaut au moins 0,70.

5. Dispersion selon la revendication 1 ou 2, **caractérisée en ce que** le polyorganosiloxane est de formule (II) et :

    - pour chaque motif $T = R^{ii}SiO_{3/2}$, $R^{ii}$ est un propyl,
    - pour chaque motif $D = R^{ii}_2SiO_{2/2}$, les deux substituants $R^{ii}$ sont des méthyl,
    - $\beta$ vaut au plus 0,40,
    - $\gamma$ vaut au moins 0,40.

6. Dispersion selon l'une quelconque des revendications précédentes, **caractérisée en ce que** la phase liquide comprend un catalyseur de réticulation.

7. Dispersion selon la revendication 6, **caractérisée en ce que** le catalyseur de réticulation est choisi parmi les composés organiques du titane ou de l'étain, notamment les titanates d'alkyle et le dicarboxylate de dialkyl-étain.

**8.** Dispersion selon l'une quelconque des revendications précédentes, **caractérisée en ce que** la phase liquide comprend un solvant organique choisi parmi les solvants des polymères silicones tels que le D4 (octaméthylcyclotétrasiloxane) ou d'autres siloxanes volatils, le white spirit, les alcools en $C_1$-$C_8$, les hydrocarbures aliphatiques ou aromatiques.

**9.** Dispersion selon l'une quelconque des revendications précédentes, **caractérisée en ce que** les particules sont des particules de dioxyde de titane présentant une taille d'au plus 100 nm.

**10.** Dispersion selon l'une quelconque des revendications précédentes, **caractérisée en ce que** les proportions entre les particules et le polyorganosiloxane sont telles que les particules représentent au moins 5 % en poids du mélange particules + polyorganosiloxane.

**11.** Dispersion selon l'une quelconque des revendications précédentes, **caractérisée en ce qu'**elle comprend au moins 5 % en poids de catalyseur de réticulation par rapport au mélange polyorganosiloxane + catalyseur.

**12.** Procédé de préparation d'une dispersion selon l'une des revendications précédentes, **caractérisé en ce qu'**on mélange les particules de dioxyde de titane et le polyorganosiloxane.

**13.** Utilisation de la dispersion selon l'une quelconque des revendications 1 à 11 pour traiter la surface d'un substrat.

**14.** Utilisation de la dispersion selon la revendication 5 pour traiter la surface d'un substrat alcalin.

**Claims**

**1.** Dispersion of particles of photocatalytic titanium dioxide, **characterized in that** the liquid phase comprises at least one polyorganosiloxane:

- either of average formula (I): $M_\alpha D_\beta Q_\delta\ (O_{1/2}R^i)_\varepsilon$, in which:
  $M = R^{ii}_3SiO_{1/2}$
  $D = R^{ii}_2SiO_{2/2}$
  $Q = SiO_{4/2}$
  with $R^{ii}$, identical or different, representing either a linear or branched alkyl radical having 1 to 8 carbon atoms, or a substituted or non-substituted aryl group having 6 to 12 carbon atoms, or an aralkyl, alkaryl, aryloxyalkyl or alkoxyaryl group in which the aryl group comprises 6 to 12 carbon atoms which can be optionally substituted by at least one linear or branched alkyl or alkoxy group having 1 to 4 carbon atoms, and in which the alkyl or alkoxy group has 1 to 4 carbon atoms and is linear or branched,
  $\alpha$, $\beta$ and $\delta$ respectively represent the molar fractions of silicon atoms of the M, D and Q units, with $\alpha + \beta + \delta = 1$, and:
  $\alpha \leq 0.10$, preferably $a \leq 0.010$,
  $\beta \leq 0.85$,
  $\delta \geq 0.10$,
  $R^i$, identical or different, represent an alkyl group having 1 to 4 carbon atoms,
  $\varepsilon$ represents the average number of $O_{1/2}R^i$ units per silicon atom,
  or of average formula (II): $M_\alpha\ D_\beta T_\gamma\ (O_{1/2}R^i)\varepsilon$, in which:
  M, D, $R^i$ and $\varepsilon$ have the meaning above, $T = R^{ii}SiO_{3/2}$, with $R^{ii}$ having the same meaning as above,
  $\alpha$, $\beta$ and $\gamma$ respectively represent the molar fractions of silicon atoms of the M, D and T units, with $\alpha + \beta + \gamma = 1$, and:
  $\alpha \leq 0.20$, preferably $\alpha \leq 0.010$,
  $\beta \leq 0.60$,
  $\gamma \geq 0.30$,

**2.** Dispersion according to claim 1, **characterized in that** the polyorganosiloxane is of formula (I) or (II) and $R^i$ is an ethyl or methyl group.

**3.** Dispersion according to claim 1 or 2, **characterized in that** the polyorganosiloxane is of formula (II) and:

- for each $T = R^{ii}SiO_{3/2}$ unit, R" is a methyl,

- for each D = $R^{ii}{}_2SiO_{2/2}$ unit, one $R^{ii}$ substituent is a methyl and the other $R^{ii}$ substituent is an octyl,
- $\beta$ is no greater than 0.10,
- $\gamma$ is no greater than 0.70.

**4.** Dispersion according to claim 1 or 2, **characterized in that** the polyorganosiloxane is of formula (II) and:

- for each T = $R^{ii}SiO_{3/2}$ unit, $R^{ii}$ is a methyl,
- for each D = $R^{ii}{}_2SiO_{2/2}$ unit, both $R^{ii}$ substituents are methyls,
- $\beta$ is no greater than 0.30,
- $\gamma$ is no greater than 0.70.

**5.** Dispersion according to claim 1 or 2, **characterized in that** the polyorganosiloxane is of formula (II) and:

- for each T = $R^{ii}SiO_{3/2}$ unit, $R^{ii}$ is a propyl,
- for each D = $R^{ii}{}_2SiO_{2/2}$ unit, both $R^{ii}$ substituents are methyls,
- $\beta$ is no greater than 0.40,
- $\gamma$ is at least 0.40.

**6.** Dispersion according to any one of the previous claims, **characterized in that** the liquid phase comprises a cross-linking catalyst.

**7.** Dispersion according to claim 6, **characterized in that** the cross-linking catalyst is chosen from the organic compounds of titanium or tin, in particular alkyl titanates and dialkyl-tin dicarboxylate.

**8.** Dispersion according to any one of the previous claims, **characterized in that** the liquid phase comprises an organic solvent chosen from the solvents of silicone polymers such as D4 (octamethylcyclotetrasiloxane) or other volatile siloxanes, white spirit, $C_1$-$C_8$ alcohols, aliphatic or aromatic hydrocarbons.

**9.** Dispersion according to any one of the previous claims, **characterized in that** the particles are titanium particles of a size no greater than 100 nm.

**10.** Dispersion according to any one of the previous claims, **characterized in that** the proportions of the particles and the polyorganosiloxane are such that the particles represent at least 5% by weight of the particle + polyorganosiloxane mixture.

**11.** Dispersion according to any one of the previous claims, **characterized in that** it comprises at least 5% by weight of the cross-linking catalyst with respect to the polyorganosiloxane + catalyst mixture.

**12.** Process for the preparation of a dispersion according to any one of the previous claims, **characterized in that** the titanium dioxide and polyorganosiloxane particles are mixed.

**13.** Use of the dispersion according to any one of claims 1 to 11 to treat the surface of a substrate.

**14.** Use of a dispersion according to claim 5 to treat the surface of an alkaline substrate.

**Patentansprüche**

**1.** Dispersion von photokatalytischen Titandioxid-Teilchen, **dadurch gekennzeichnet, daß** die flüssige Phase mindestens ein Polyorganosiloxan umfaßt:

- entweder der mittleren Formel (I) $M_\alpha D_\beta Q_\delta\ (O_{1/2}R^i)\varepsilon$, wobei:

  - ♦ M = $R^{ii}{}_3SiO_{1/2}$
    D = $R^{ii}{}_2SiO_{2/2}$
    Q = $SiO_{4/2}$
    mit $R^{ii}$, gleich oder verschieden, darstellend ein lineares oder verzweigtes Alkylradikal mit 1 bis 8 Kohlenstoffatomen, oder eine substituierte oder nicht substituierte Arylgruppe mit 6 bis 12 Kohlenstoffatomen,

oder eine Aralkyl-, Alkaryl-, Aryloxyalkyl- oder Alkoxyarylgruppe, bei der die Arylgruppe 6 bis 12 Kohlenstoffatome aufweist, welche gegebenenfalls substituiert sein können mit mindestens einer Alkyl- oder Alkoxygruppe, linear oder verzweigt, mit 1 bis 4 Kohlenstoffatomen, und bei der die Alkyl- oder Alkoxygrupe mit 1 bis 4 Kohlenstoffatomen linear oder verzweigt ist,

- ♦ $\alpha$, $\beta$ und $\delta$ jeweils die molaren Anteile der Siliciumatome der Motive M, D und Q darstellen, mit $\alpha + \beta + \delta = 1$, und:
  $\alpha \leq 0{,}10$, bevorzugt $\alpha \leq 0{,}010$,
  $\beta \leq 0{,}85$,
  $\delta \geq 0{,}10$,
- ♦ $R^i$, gleich oder verschieden, eine Alkylgruppe mit 1 bis 4 Kohlenstoffatomen darstellen,
- ♦ $\varepsilon$ die mittlere Anzahl der Motive $O_{1/2}R^i$ pro Siliciumatom darstellt,

- oder der mittleren Formel (II) $M_\alpha D_\beta T_\gamma (O_{1/2}R^i)\varepsilon$, wobei:

  - ♦ M, D, $R^i$ und $\varepsilon$ die obige Bedeutung haben, $T = R^{ii}SiO_{3/2}$, mit $R^{ii}$ der obigen Bedeutung,
  - ♦ $\alpha$, $\beta$ und $\gamma$ jeweils die molaren Anteile der Siliciumatome der Motive M, D und T darstellen, mit $\alpha + \beta + \gamma = 1$, und:
    $\alpha \leq 0{,}20$, bevorzugt $\alpha \leq 0{,}010$,
    $\beta \leq 0{,}60$,
    $\gamma \geq 0{,}30$.

**2.** Dispersion gemäß Anspruch 1, **dadurch gekennzeichnet, daß** das Polyorganosiloxan die Formel (I) oder (II) aufweist und $R^i$ eine Ethyl- oder Methylgruppe ist.

**3.** Dispersion gemäß Anspruch 1 oder 2, **dadurch gekennzeichnet, daß** das Polyorganosiloxan die Formel (II) aufweist, und:
für jedes Motiv $T = R^{ii}SiO_{3/2}$, $R^{ii}$ ein Methyl ist,
für jedes Motiv $D = R^{ii}_2SiO_{2/2}$, ein Substituent $R^{ii}$ ein Methyl und der andere Substituent $R^{ii}$ ein Octyl ist,
$\beta$ maximal 0,10 ist,
$\gamma$ mindestens 0,70 ist.

**4.** Dispersion gemäß einem der Ansprüche 1 oder 2, **dadurch gekennzeichnet, daß** das Polyorganosiloxan die Formel (II) aufweist, und:
für jedes Motiv $T = R^{ii}SiO_{3/2}$, $R^{ii}$ ein Methyl ist,
für jedes Motiv $D = R^{ii}_2SiO_{2/2}$, die zwei Substituenten $R^{ii}$ Methyl sind,
$\beta$ maximal 0,30 ist,
$\gamma$ mindestens 0,70 ist.

**5.** Dispersion gemäß Anspruch 1 oder 2, **dadurch gekennzeichnet, daß** das Polyorganosiloxan die Formel (II) aufweist, und:
für jedes Motiv $T = R^{ii}SiO_{3/2}$, $R^{ii}$ ein Propyl ist,
für jedes Motiv $D = R^{ii}_2SiO_{2/2}$, die beiden Substituenten $R^{ii}$ Methyl sind,
$\beta$ maximal 0,40 ist,
$\gamma$ mindestens 0,40 ist.

**6.** Dispersion gemäß einem der vorhergehenden Ansprüche, **dadurch gekennzeichnet, daß** die flüssige Phase einen Vernetzungskatalysator umfaßt.

**7.** Dispersion gemäß Anspruch 6, **dadurch gekennzeichnet, daß** der Vernetzungskatalysator ausgewählt ist aus organischen Verbindungen von Titan oder Zinn, im besonderen die Alkyltitanate und das Dicarboxylat von Dialkylzinn.

**8.** Dispersion gemäß einem der vorhergehenden Ansprüche, **dadurch gekennzeichnet, daß** die flüssige Phase ein organisches Lösungsmittel enthält, ausgewählt aus den Lösungsmitteln der Siliconpolymere wie das D4 (Octamethylcyclotetrasiloxan) oder anderer flüchtiger Siloxane, der "white spirit", die Alkohole mit $C_1$-$C_8$, die aliphatischen oder aromatischen Kohlenwasserstoffe.

**9.** Dispersion gemäß einem der vorhergehenden Ansprüche, **dadurch gekennzeichnet, daß** die Teilchen Titandioxid-Teilchen mit einer Größe von maximal 100 nm sind.

**10.** Dispersion gemäß einem der vorhergehenden Ansprüche, **dadurch gekennzeichnet, daß** die Verhältnisse zwischen den Teilchen und dem Polyorganosiloxan so liegen, daß die Teilchen mindestens 5 Gew.-% der Mischung aus Teilchen und Polyorganosiloxan darstellen.

**11.** Dispersion gemäß einem der vorhergehenden Ansprüche, **dadurch gekennzeichnet, daß** sie mindestens 5 Gew.-% des Vernetzungskatalysators, bezogen auf die Mischung aus Teilchen und Polyorganosiloxan, umfaßt.

**12.** Verfahren zur Herstellung einer Dispersion gemäß einem der vorhergehenden Ansprüche, **dadurch gekennzeichnet, daß** man Titandioxid-Teilchen und das Polyorganosiloxan vermischt.

**13.** Verwendung der Dispersion gemäß einem der Ansprüche 1 bis 11 zur Oberflächenbehandlung eines Substrats.

**14.** Verwendung der Dispersion gemäß Anspruch 5 zur Oberflächenbehandlung eines alkalischen Substrats.